# EUROPEAN PATENT APPLICATION

(11) **EP 4 032 497 A1**
(43) Date of publication of application: **27.07.2022**
(21) Application number: 21305075.0
(22) Date of filing: 21.01.2021
(51) Int. Cl.: A61C 5/62, A61C 5/66

(54) **A DISPENSING GUN FOR DELIVERING A MATERIAL FROM A CARTRIDGE**

(71) Applicant: Septodont ou Septodont SAS ou Specialites Septodont, 94100 Saint Maur des Fossés (FR)
(72) Inventor: The designation of the inventor has not yet been filed
(74) Representative: Icosa

(57) **Abstract**

The dispensing gun (1), intended for delivering a material from a cartridge, comprises a frame (2) having a handle (21), an injection gate (22) for connecting a cartridge, preferably a dental cartridge, said injection gate (22) being located at the distal part of the frame (2), a lever (3) comprising at least two teeth (31) and a piston (4) comprising at least two notches (41), and is characterized in that:
- the dispensing gun (1) comprises means for directly locking the cartridge on the injection gate (22); and
- the dispensing gun (1) comprises means for pushing the piston (4) inside the cartridge so that the material contained in the cartridge is extruded in a single piston stroke; and
- the dispensing gun (1) is configured so that the lever (3) comprises an actuating state in which the first notch (41) of the piston (4) and the first tooth (31) of the lever (3) are engaged together prior to connecting the cartridge so that the lever (3) and the handle (21) form an angle of almost 90°.

## Description

### FIELD OF INVENTION

The present invention relates to a dispensing gun (or dispenser) for a cartridge. Especially, the dispensing gun of the invention is advantageously suitable for delivering a pasty material contained in a cartridge. The present invention also concerns the use of the dispensing gun in the medical field, in particular in the dental field or in the orthopedic field.

### BACKGROUND OF INVENTION

Cartridges suitable for the mixing and dispensing of material are particularly interesting for dental restoration applications, in order to mix a multi-component dental restoration material and dispense it on a tooth of a subject. A dental restoration material classically comprises a powder component and a liquid component, which are mixed to form a dental cement. Especially, cartridges have been developed for dental restoration applications, in which certain amounts of a powder component and of a liquid component are previously weighed and accommodated in isolated chambers so as to prevent any accidental mixing of the two components. In such cartridges, the components can be released from the isolated chambers at a desired time and mechanically mixed with each other to form a dental cement that is dispensed from the cartridge.

For dispensing the material contained in the cartridge, a dispensing device is generally required. Especially, in the dental field, several dispensing guns have been developed for dispensing a dental material contained in a cartridge.

For example, WO95/00078 discloses a dispensing gun having a cartridge holder for receiving a cartridge. In WO95/00078, there is no means for locking the cartridge to the dispensing gun so that the dispensing gun of WO95/00078 cannot guarantee a safely handling when the practitioner operates.

Other dispensing devices, such as that disclosed in US2018/0185117, require the practitioner to operate the lever of the device several times for delivering the material contained in the cartridge. These dispensing devices are not ergonomic and often are not able to dispense the whole amount of the material.

It is these drawbacks that the invention is intended more particularly to remedy by proposing a dispensing gun for dispensing a material from a cartridge which is easy to operate while making the dispensing of the material more secure, in particular by limiting the risks of loss of a part of the material. The dispensing gun also advantageously allows the extrusion of the entire material contained inside the cartridge, in one single stroke of the piston of the dispensing gun.

### SUMMARY

For this purpose, a subject of the invention is a dispensing gun for a cartridge comprising a frame having a handle, an injection gate for connecting a cartridge, said injection gate being located at the distal part of the frame, a lever comprising at least two teeth and a piston (also called gun piston) comprising at least two notches, wherein:
- the dispensing gun comprises means for directly locking the cartridge on the injection gate; and
- the dispensing gun comprises means for pushing the gun piston inside the cartridge so that the material contained in the cartridge is extruded in a single piston stroke; and
- the dispensing gun is configured so that the lever comprises an actuating state in which the first notch of the gun piston and the first tooth of the lever are engaged together prior to connecting the cartridge, so that the lever and the handle form an angle ranging from 80° to 120°, preferably being 90°.

In a conventional manner, within the frame of the invention, the terms "proximal" and "distal" refer to a position of portions of the dispensing gun with reference to an operator (e.g. a dentist), i.e. the term "proximal" refers to a position closer to the operator of the cartridge, while the term "distal" refers to a position that is more distant from the operator.

According to one embodiment, the dispensing gun is configured so that the lever further comprises a final state in which the lever is depressed and the piston of the dispensing gun is engaged in the cartridge so that the material initially contained in the cartridge has been entirely extruded. In this way, the material is dispensed while limiting the material losses.

According to one embodiment, the dispensing gun is configured so that the lever further comprises an intermediate state in which the lever is maintained in a position between the actuating state and the final state, so that the dispensing gun is ready to use for extruding the material contained in a cartridge connected to the gun. Preferably, in the intermediate state, when the cartridge connected to the gun comprises a piston, the gun piston is positioned close to the piston of the cartridge. In the present invention, the term "close to" refers to the relative position of two elements (for example, the relative position of the gun piston to the cartridge piston) separated each other of a distance lower than 10 mm, preferably lower than 9, 8, 7, 6, 5, 4, 3, 2 or 1 mm. According to one embodiment, the term "close to" refers to the relative position of two elements (for example, the relative position of the gun piston to the cartridge piston) in direct contact with each other (that-is-to say the distance between the gun piston and the cartridge piston is zero). According to one embodiment, the expression "the distal end of the gun piston is close to the proximal end of the cartridge piston" means that the surface of the distal end of the gun piston is in contact and covers at least partially or entirely the surface of the proximal end of the cartridge piston. In this way, the thrust force to be applied by the practitioner on the lever in the final state for extruding the material from the cartridge is minimized. Advantageously, the handling of the dispensing gun for the practitioner is more ergonomic and the use of the dispensing gun is easier than with existing guns.

According to one embodiment, the injection gate is configured for locking a cartridge which has a base section with two opposite locking wings, preferably the injection gate comprises means for directly locking the external sleeve of the cartridge via its two locking wings. In this way, this particular arrangement ensures a correct positioning of the cartridge on the dispensing gun and provides a safely connection between the cartridge and the dispensing gun. Consequently, when the system of the invention (dispensing gun with cartridge) is used and when a thrust force is applied for delivering the material, the cartridge holds in place.

According to one embodiment, the gun piston comprises a rod configured to be received in the internal volume of the cartridge when locked on the distal part of the injection gate. In this way, during the extrusion of the material, the gun piston efficiently pushes the material in the outlet nozzle of the cartridge and all the material contained in the cartridge is extruded.

According to one embodiment, the pivot of the lever from the actuating state to the final state displaces the gun piston of a distance comprised in the range from 10 mm to 20 mm, preferably from 14 mm to 16 mm; more preferably from 15 mm to 18 mm. In this way, the pivot of the lever leads to the displacement of the piston of the dispensing gun so that, when a cartridge is connected to the gun, the gun piston pushes the cartridge piston and leads to the extrusion of the entire material contained in said cartridge. In the present invention, the term "comprised in the range" means that the range terminals are included.

According to one embodiment, when the lever is in an actuating state, the distal end of the gun piston is located at the proximal end of the injection gate.

According to one embodiment, the frame comprises one or more ribs, preferably comprises only one rib.

According to one embodiment, the dispensing gun comprises a washer positioned behind the frame's rib.

According to one embodiment, when the lever is in the intermediate state, the lever is maintained in a position between the actuating state and the final state by a spring plunger.

According to one embodiment, the injection gate comprises a proximal part configured to connect the distal end of the frame and a distal part configured to connect and lock the two opposite locking wings of the base section of the cartridge.

According to one embodiment, the frame is made of an injected-molded polymer and the injection gate is made of metal.

According to one embodiment, the dispensing gate is autoclavable and/or decontaminable. In this way, the dispensing gate may be easily washed after use and may be reused. In the present invention, the term "autoclavable" refers to an object that may be sterilized in an autoclave. In the present invention, the term "decontaminable" refers to an object that may be sterilized or washed so that to decrease or delete the micro-organisms present on said object.

Another object of the invention refers to a system comprising the dispenser as defined above and a cartridge having a base section with two opposite locking wings. According to one embodiment, the dispensing gun of the invention or the system of the invention is useful in the dental field, or in the orthopedic field; preferably for bone or dental restoration.

Another subject of the invention is a method of dispensing a material comprised in a cartridge by means of the dispensing gun as described above, comprising the following steps:
- a first step of initiating the dispensing gun of the invention, wherein under the action of a thrust force applied on the lever, the lever is positioned in an actuating state in which the first notch of the gun piston and the first tooth of the lever are engaged together prior to connecting the cartridge so that the lever and the handle form an angle ranging from 80° to 120°, preferably of almost 90° or of 90°;
- a second step of locking on the distal part of the injection gate, the base section of the cartridge containing the material to be delivered;
- a third step of moving the piston of the dispensing gun in a position ready to be used for extrusion of the material contained in the cartridge; and
- a fourth step of dispensing the material contained in the cartridge under the action of a thrust force applied on the lever until the lever is depressed (final state), the gun piston being displaced inside the cartridge so that the entire material is extruded, preferably in one single stroke of the gun piston.

### DESCRIPTION OF THE DRAWINGS

Features and advantages of the invention will become apparent from the following description of several embodiments of a dispensing gun according to the invention, this description being given merely by way of example and with reference to the appended drawings in which:
**Figure 1** is an exploded perspective view of a dispensing gun according to a first embodiment of the invention;
**Figure 2** is a longitudinal section of the dispensing gun of the cartridge of Figure 1, in an actuating state of the lever;
**Figure 3** is a side view of the dispensing gun of the invention, when the lever is in an intermediate state corresponding to the configuration in which the piston of the dispensing gun is in contact with the piston of the cartridge, ready to extrude the material (Figure 3A), and when the lever is in a final state corresponding to the end of distribution of the material (Figure 3B);
**Figure 4** is a perspective view of the injection gate comprising means for safely connecting and lock the base section of a cartridge having two locking wings.
**Figure 5** is an exploded perspective view of a cartridge suitable for use in a dispensing gun according to a first embodiment of the invention, suitable for mixing and dispensing a two-component system material comprising a powder component and a liquid component;
**Figure 6** is a longitudinal section of the cartridge of Figure 5, in an initial storage configuration of the cartridge;
**Figure 7** is a longitudinal section similar to Figure 6, in a first activated configuration of the cartridge;
**Figure 8** is a longitudinal section similar to Figure 6, in a second activated configuration of the cartridge.
**Figure 9** is a longitudinal section similar to Figure 6, in a dispensing configuration of the cartridge corresponding to the end of distribution of the material implemented by the dispensing gun of the invention.

### ILLUSTRATIVE EMBODIMENTS OF THE INVENTION

### Dispensing gun of the invention

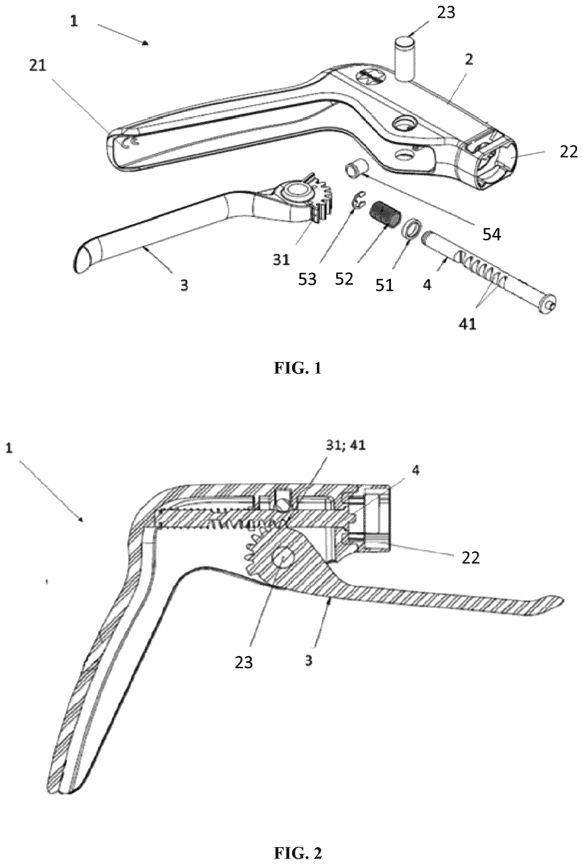

Figure 1 shows an exploded view of a dispensing gun 1 according to a first embodiment of the invention, suitable both for locking the base section of a cartridge and then, for dispensing a material contained in the cartridge.

As visible in Figure 1, the dispensing gun 1 comprises a frame 2 with a handle 21 and an injection gate 22 located at the distal end of the frame 2. In this first embodiment, the dispensing gun 1 includes a lever 3, a piston 4, a washer 51, a spring 52, a retaining ring 53, a spring plunger 54 and a pivot pin 23.

As seen in Figure 1, the frame 2 has the shape of a gun and has a handle 21 allowing the practitioner to handle the dispensing gun with one hand, either the left hand or the right hand. In the first embodiment of the dispensing device presented in Figures 1 to 3, the palm of the practitioner's hand has to be placed on the handle 21 and the fingers of the practitioner's hand have to be placed on the lever 3.

The lever 3 is attached to the frame 2 thanks to a pivot pin 23 allowing to connect the lever 3 to the frame 2 while keeping the ability for the lever 3 to move in a hemi-circular movement about the axis of the pivot pin 23. The lever 3 comprises a grip part and a head. The head of the lever 3 comprises one or more teeth 31. According to one embodiment, the head of the lever 3 comprises 1, 2, 3, 4, 5, 6 or 7 teeth. According to one embodiment, the teeth of the head of the lever 3 are configured for cooperating with the gun piston 4. According to one embodiment, the gun piston 4 is a rod. According to one embodiment, the gun piston 4 comprises one or more notches 41. According to one embodiment, the number of teeth 31 is the same as the number of notches 41. According to one embodiment, the gun piston 4 is a rod comprising at least two notches, preferably from 3 to 8 notches, more preferably 7 notches, said notches being located in the central part of the gun piston 4.

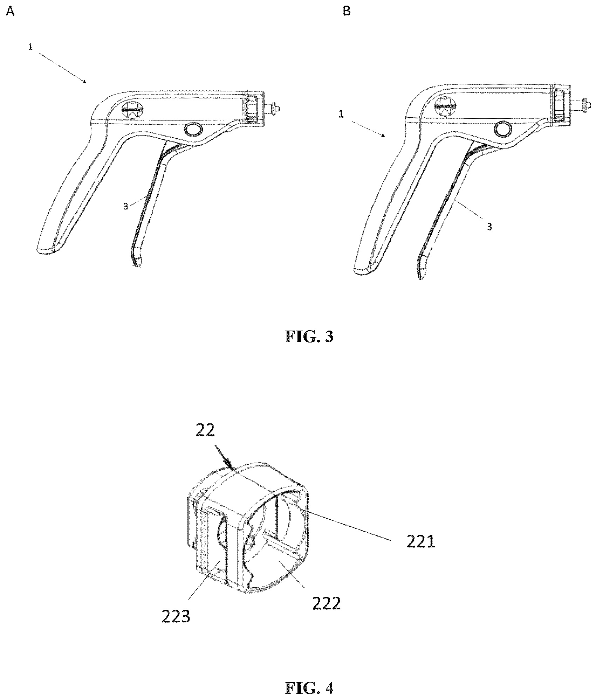

As presented in Figures 2 and 3, when using the dispensing gun, the lever 3 successively takes three distinct positions: an actuating state (Figure 2), an intermediate state (Figure 3A) and a final state (Figure 3B).

The "actuating state" in the present invention refers to the position of the lever 3 in which the first notch (41) of the gun piston (4) and the first tooth (31) of the lever (3) are engaged together prior to connecting the cartridge so that the lever (3) and the handle (21) form an angle ranging from 80° to 120°, preferably of almost 90°. As seen in Figure 2, in the actuating state, the distal end of the gun piston 4 is located at the proximal end of the injection gate 22. According to one embodiment, in the actuating state, the distal end of the gun piston 4 is not inside the inner volume of the injection gate 22. According to one embodiment, in the actuating state, the rod of the gun piston 4 is not inside the inner volume of the injection gate. According to one embodiment, in the actuating state, the cartridge is not connected, retained and/or locked on the dispensing gun 1.

The "final state" in the present invention refers to the position of the lever 3 in which the lever 3 is fully depressed. As seen in Figure 3B, in the final state, the longitudinal axis of the lever 3 is parallel to the longitudinal axis of the handle 21 of the dispensing gun. According to one embodiment, in the final state, the pivot of the lever from the actuating state to the final state leads to the maximum displacement of the gun piston 4 inside the dispensing gun and/or leads to the maximum displacement of the piston of the cartridge locked on the dispensing gun. According to one embodiment, in the final state, the pivot of the lever from the actuating state to the final state causes the extrusion of the whole material contained in the cartridge, preferably in one single stroke of the gun piston 4 inside the dispensing gun and/or in one single stroke of the piston of the cartridge locked on the dispensing gun.

As visible in Figure 3A, the "intermediate state" refers to a position of the lever 3 between the actuating state and the final state as defined above. According to one embodiment, in the intermediate state, the gun piston 4 is engaged in the injection gate 22 and the distal end of the gun piston 4 is located out of the distal end of the injection gate 22. According to one embodiment, in the intermediate state, the cartridge is locked on the distal end of the injection gate and the distal end of the gun piston 4 is located close to the piston of the cartridge, preferably is in contact with it, so that the system is ready to extrude the material, without extruding the material.

As presented in Figure 4, the injection gate 22 comprises a distal plate 221 with an aperture 222. The shape of the aperture 222 corresponds to the shape of the base section of the cartridge. In this way, the cartridge can be engaged in the injection gate 22 of the dispensing gun. According to one embodiment, the shape of the aperture 222 corresponds to the shape of the base section of a cartridge having two opposite locking wings.

The injection gate 22 also comprises means for locking the cartridge upon received inside the injection gate 22. According to one embodiment, means for locking the cartridge to the dispensing gun 1 (and to the injection gate 22) comprise or consist of at least one hole on at least one side wall of the distal plate 221 of the injection gate 22. According to one embodiment, means for locking the cartridge to the dispensing gun 1 (and to the injection gate 22) comprise or consist of one hole 223 on each vertical side wall of the distal plate 221 of the injection gate 22. In this way, when the cartridge is pushed inside the injection gate through the aperture on the distal plate 221, then rotating the cartridge a quarter turn about the longitudinal axis of the cartridge leads to displace the locking wings of the cartridge inside the two holes of the vertical side walls of the injection gate 22 and leads to safely lock the cartridge on the dispensing gun 1. According to one embodiment, the side walls of the injection gate 22 have a thickness higher than the thickness of the base section and/or of the locking wings of the cartridge.

### Cartridge

The present invention also refers to a system comprising the dispensing gun 1 of the invention and a cartridge 6. In the present invention, the cartridge may be any cartridge suitable with the dispensing gun 1 of the invention. Especially, the cartridge may contain any suitable material able to be delivered with the dispensing gun 1 of the invention, preferably the material is a medical composition such as for example a bone filling material or a dental material. According to one embodiment, the cartridge may be a medical cartridge such as a dental cartridge. According to one embodiment, the cartridge described in PCT/EP2020/070358 is particularly suitable to be used with the dispensing gun 1 of the invention. According to one embodiment, the cartridge comprises a base section with at least one protrusion, a chamber containing the material to be dispensed, a piston and a dispensing nozzle. According to one embodiment, the cartridge comprises a base section with means to be locked in the dispensing gun 1 of the invention, preferably on the injection gate 22 of the dispensing gun 1. According to one embodiment, means of the cartridge to be locked in the dispensing gun 1 comprise or consist of at least two wings located on the base section of the cartridge, preferably two opposite locking wings.

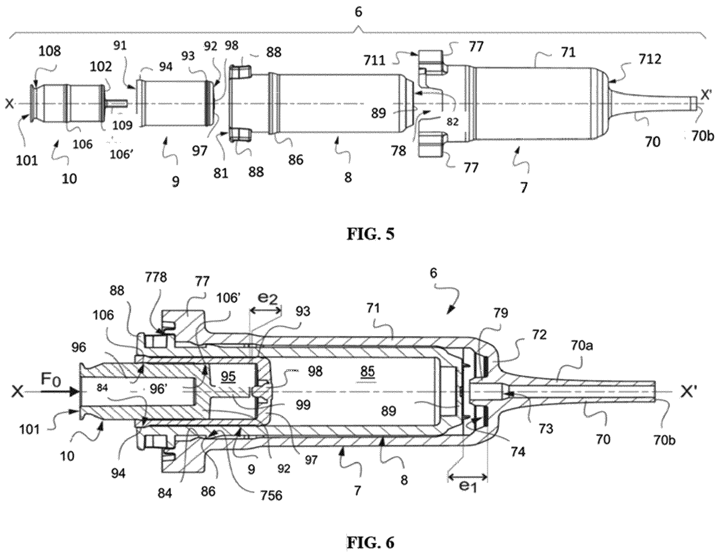

Figure 5 shows an exploded view of a cartridge 6 suitable both for the mixing and the dispensing of a two-component dental restoration material comprising a powder component and a liquid component and suitable for use with the apparatus according to the invention. As visible in Figure 5, the cartridge 6 comprises successive tubular members with circular cross sections, which are configured to be inserted one inside the other while being aligned along their longitudinal axis X-X'. In this embodiment, the tubular members of the cartridge 6 include, going from the outermost element to the innermost element, an external sleeve 7, a barrel 8, a liquid receptacle 9 and a plunger 10.

The sleeve 7 comprises a body 71 including a proximal open end 711 and a distal end 712 defined by a distal wall 72 of the sleeve. The distal wall 72 is provided with a dispensing hole 73, from which extends a tubular dispensing nozzle 70 formed in one piece with the body 71 of the sleeve. The thickness t₇₀ of the peripheral wall 70a of the dispensing nozzle 70 decreases from the dispensing hole 73 toward a free end 70b of the dispensing nozzle. Thanks to this specific geometry combined to the constitutive material of the dispensing nozzle 70, which is a polymer, preferably a transparent polymer such as a transparent amorphous copolyester in this example, the dispensing nozzle 70 is deformable while being capable of retaining a constant internal diameter even when it is bent. In this way, the dispensing nozzle 70 is steerable while having a constant diameter for the dispensing of material.

The distal wall 72 of the sleeve 7 comprises an internal piercing element 79 in the alignment of the dispensing hole 73, which is intended to break a breakable distal wall 79 of the barrel 8. The piercing element 79 is a tubular element projecting internally from the distal wall 72 of the sleeve so as to be in fluid communication with the dispensing hole 73. Thanks to this arrangement, once the distal wall 89 of the barrel 8 has been broken, the tubular piercing element 79 forms a privileged passageway guiding the material contained in the barrel 8 directly to the dispensing hole 73, which limits the losses of material in the interspace between the barrel 8 and the sleeve 7.

The inner diameter d₇₉ of the piercing element 79 is slightly higher than the diameter d₇₃ of the dispensing hole 73. In this way, the opening created in the distal wall 89 of the barrel 8 under the action of the piercing element 79 has a size suitable to ensure a proper flow of the material to be dispensed. Around the piercing element 79, the sleeve 7 comprises an annular (or ring-shaped) cavity 74 whose bottom is formed by the inner surface of the distal wall 72, while the central wall of the ring is formed by the peripheral wall of the tubular piercing element 79 and the external wall of the ring is formed by a beveled inner surface complementary to a corresponding beveled outer surface 88 of the barrel 8. The complementary beveled surfaces are designed to provide an efficient sealing at the interface between the sleeve 7 and the barrel 8 adjacent to the piercing element 79 and the dispensing hole 73, so as to limit the passage of material in the interspace between the barrel 8 and the sleeve 7.

As visible in Figures 5 and 6, the barrel 8 of the cartridge 6 comprises a proximal open end 81 and a distal end 82 defined by the breakable distal wall 89. The barrel 8 delimits a chamber 85 configured to receive the powder component of the two-component dental restoration material. The constitutive material of the barrel 8 is selected to have a Water Vapor Transfer Rate (WVTR) at 23°C and 85% RH, for a film thickness of 100 µm, of less than 0.5 g/(m²-day), so as to maintain a constant humidity level in the chamber 85 suitable to protect the moisture sensitive powder component. In particular, in this example, the barrel 8 is made of a cyclic olefin copolymer (COC) having a WVTR at 23°C and 85% RH, for a film thickness of 100 µm, of the order of 0.4 g/(m²-day). According to another embodiment, the constitutive material of the barrel 8 is selected to have a Water Vapor Transfer Rate (WVTR) at 23°C and 85% RH, for a film thickness of 100 µm, of higher than 0.5 g/(m²-day).

The distal wall 89 of the barrel 8 comprises a central breakable portion surrounded by a sealing portion configured to cooperate with the inner surface of the distal wall 72 of the sleeve. Advantageously, the ratio of the surface area of the breakable portion to the surface area of the sealing portion is such that, after opening, the fins of the open breakable portion leave the dispensing hole 73 of the sleeve completely cleared, while the bearing surface of the sealing portion is a sufficiently thin ring to limit the contact area. In this way, the seal is easier to achieve with the distal wall 72 of the sleeve and the contact pressure is maximized to ensure sealing during the dispensing of the material. This arrangement ensures a proper flow of the material to be dispensed while limiting the material losses.

The diameters of the breakable portion and the piercing element 79 are also adjusted to maximize the breakage efficiency of the piercing element 79. For example, in the illustrated example, the diameter d₇₉ of the piercing element 79 is of the order of half the diameter d of the breakable portion. The breakable portion comprises six weakened lines distributed radially in a star shape, starting from a central portion of the distal wall 89. Each weakened line has a thickness t lower than the thickness t₈₉ of the rest of the distal wall 89. The central portion of the star makes it possible to have a stress concentration so that the breaking starts in the center of the star.

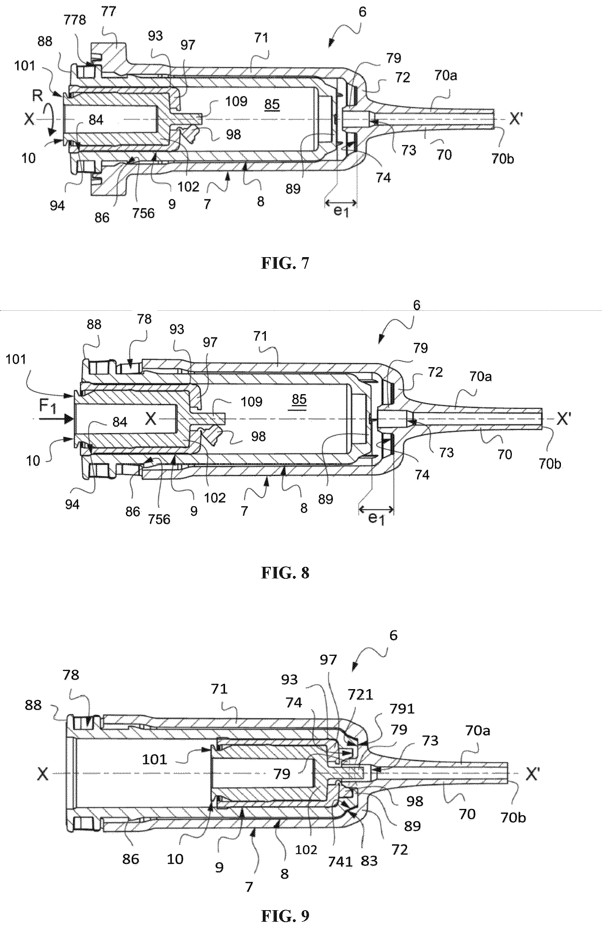

This arrangement of the weakened lines is configured to guide a deformation of the distal wall 89 of the barrel, when it is submitted to the action of the piercing element 89, in a corolla shape oriented away from the dispensing nozzle 70. In practice, the rupture of the distal wall 89 is obtained through a displacement of the barrel 8 in the sleeve 7 along the longitudinal axis X-X' between a first position, visible in Figure 6 in which the distal wall 89 of the barrel is at a distance ei from the distal wall 72 of the sleeve, and a second position, (visible in Figure 9), in which the sealing portion of the distal wall 89 of the barrel is in contact with the inner surface of the distal wall 72 of the sleeve and the complementary beveled surfaces 83;741 cooperate, thus providing a sealing between the sleeve 7 and the barrel 8.

The barrel 8 also comprises two diametrically opposed tabs 88 near its proximal end 81. Each tab 88 is configured to be received in a corresponding housing 778 defined by a locking wing 77 of the sleeve 7 arranged near the proximal end 71, so as to lock the barrel 8 in the first position with respect to the sleeve 7. This locked configuration of the cartridge 6 ensures that the distal wall 89 of the barrel 8 remains at the distance ei from the distal wall 72 of the sleeve, so that the cartridge 6 can be manipulated without any risk of the distal wall 89 being pierced by the piercing element 79, which makes it possible to implement a mixing step prior to the dispensing step.

In addition, the barrel 8 comprises an outer radial collar 86 configured to cooperate with inner radial recesses 756 formed by six clipping members 75 distributed circumferentially inside the body 71 of the sleeve 7. The cooperation between the outer radial collar 86 and the inner radial recesses 756 makes it possible to keep the barrel 8 in the first position with respect to the sleeve 7 even when the tabs 88 are disengaged from the housings 778, thus allowing the cartridge 6 to be secured in a storage configuration even when the locking system 88/778 is not active.

As can be seen particularly in Figure 8, the body 71 of the sleeve 7 also comprises two diametrically opposed longitudinal grooves 78 near its proximal end 711, which are configured to guide the displacement of the tabs 88 of the barrel 8 when the barrel is moved from the first position to the second position. The longitudinal grooves 78 ensure a guiding of the barrel 8 near the proximal end 711, in its movement towards the piercing element 79, while another guiding is ensured near the proximal end 712 by six guiding ribs 76 distributed circumferentially inside the body 71 of the sleeve. The guiding means 76 and 78 improve the stability of the displacement of the barrel 8 to reach the dispensing configuration of the cartridge 6.

The chamber 85 of the barrel 8 is sealed by means of a piston formed by the combination of the liquid receptacle 9 and the plunger 10. In this illustrative example, the receptacle 9 is made of low-density polyethylene (LDPE) and the plunger 10 is made of acrylonitrile butadiene styrene (ABS). The receptacle 9 comprises a proximal open end 91 and a distal end 92 defined by an openable distal wall 97. The receptacle 9 delimits a chamber 95 configured to receive the liquid component of the two-component dental restoration material. The distal wall 97 of the receptacle 9 comprises a detachable portion 98 attached to the rest of the distal wall by an annular connecting part 99. The annular connecting part 99 comprises a solid portion extending over an angle α of the order of 60°, and a weakened portion having a thickness t less than the thickness t of the solid portion, so as to form a hinge. This arrangement makes it possible to open the distal wall 97 of the receptacle 9 by rupturing only the weakened portion, so that the detachable portion 98 flips out of the receptacle 9 while remaining connected to the distal wall 97 of the receptacle 9 through the hinge formed by the solid portion.

The receptacle 9 is configured to move in sealing engagement in the chamber 85 of the barrel 8. To this end, the receptacle 9 is provided externally with a peripheral sealing rib 93 configured to prevent the passage of the liquid component, initially contained in the chamber 95 of the receptacle 9, toward the interspace between the barrel 8 and the receptacle 9, when the distal wall 97 of the receptacle is open and the receptacle 9 is moved towards the distal wall 89 of the barrel.

In practice, the opening of the distal wall 97 of the receptacle 9 is obtained thanks to a rod 109 extending distally from the distal wall 102 of the plunger 10. More precisely, the chamber 95 of the receptacle 9 is sealed by means of the plunger 10, which is movable in the chamber 95 and whose distal rod 109 is configured to apply a pressure on the detachable portion 98 of the distal wall 97 of the receptacle. Before the opening of the distal wall 97, the powder component is hermetically received in the chamber 85 of the barrel 8 and the liquid component is hermetically received in the chamber 95 of the receptacle 9. The two components can then be easily mixed together at a desired time, so as to form the material to be dispensed, by opening the openable distal wall 97 of the receptacle through application of a pressure on the detachable portion 98 with the distal rod 109 of the plunger and applying a vibration to the cartridge 6 in this activated configuration, either manually or by means of a vibration mixer.

The receptacle 9 comprises two inner peripheral grooves 96, 96' configured to cooperate with two corresponding outer peripheral ribs 106, 106' of the plunger 10 to keep the plunger 10 at a distance e₂ from the openable distal wall 97 of the receptacle 9 in a storage configuration of the cartridge 6. The cooperation between the inner peripheral grooves 96, 46' and the outer peripheral ribs 96, 96' is releasable under the effect of a thrust force Fo applied on the proximal end 101 of the plunger 10, e.g. by means of an activation machine so that to reach the activated configuration in Figure 7. The cooperating radial features 96, 106 and 96', 106' between the receptacle 9 and the plunger 10 make it possible to secure the cartridge 6 in the storage configuration where the powder component and the liquid component are separated, the first one being received in the chamber 85 of the barrel while the second one is received in the chamber 95 of the receptacle, without risk of accidental mixing of the two components.

The barrel 8 also comprises an inner peripheral groove 84 near its proximal end 81, which is configured to cooperate with an outer peripheral rib 94 of the receptacle 9 to keep the distal wall 97 of the receptacle 9 at a distance from the distal wall 89 of the barrel 8 before the piston formed by the combination of the receptacle 9 and the plunger 10 is moved towards the distal wall 89 of the barrel for the dispensing of the material. The cooperating radial features 84, 94 between the barrel 8 and the receptacle 9 make it possible to have a two-step transition of the cartridge 6 towards the dispensing configuration, obtained through the application of a thrust force Fi on the proximal end 101 of the plunger 10, e.g. by means of the dispensing gun of the invention.

### Method

The present invention also concerns a method of dispensing a material contained in a cartridge as defined above, by means of the dispensing gun 1 according to the invention as defined above, and comprises steps as described below.

Initially, the dispensing gun 1 is in the actuating state as shown in Figure 2, in which the lever 3 cooperates with the gun piston 4 so that the gun piston 4 is kept inside the frame 2, at a distance eₓ from the distal end of the injection gate 22. In this actuating configuration, the cartridge is not yet connected to the dispensing gun 1.

Then, the base section of the cartridge is pushed inside the aperture 222 of the injection gate 22. The aperture 222 and the base section of the cartridge must have the same shape in order to fit together and enable the cartridge to be received in the inner volume of the injection gate. After that, the external sleeve of the cartridge is turned a quarter turn along the longitudinal axis of the cartridge in order to lock each locking wing 77 in the hole of each vertical side walls of the distal plate 221 of the injection gate 22. In this way, when the dispensing gun is used with the cartridge, the locking wings 77 are retained by the frame of the injection gate 22, ensuring a safely handling for the practitioner.

After locking the cartridge on the dispensing gun 1, a thrust force F is applied on the lever 3 in order to pivot the lever 3 from the actuating state to the intermediate state as defined above. In this manner, the cooperation between the lever 3 and the gun piston 4 leads to the displacement of the gun piston 4 so that the distal end of the gun piston 4 is engaged in the inner volume of the injection gate 22 on which is locked the cartridge and so that the distal end of the gun piston 4 is close to the piston of the cartridge, ready to extrude the material of the cartridge but without implementing extrusion. The intermediate state of the lever 3 is achieved thanks to the action of the spring plunger 54. During this intermediate step, the barrel 8 is displaced relative to the sleeve 7 from the first position to the second position, until the distal wall 89 of the barrel is in contact with the distal wall 72 of the sleeve and broken by the piercing element 79. In this step, the radial features 84, 94 between the barrel 8 and the receptacle 9 are mutually engaged so that the barrel 8, the receptacle 9 and the plunger 10 move integrally with one another.

Finally, under the action of a thrust force F' on the lever 3, the gun piston 4 advances inside the cartridge so that the distal end of the gun piston 4 pushes the piston of the cartridge formed by the combination of the receptacle 9 and the plunger 10 which is displaced relative to the barrel 8, the radial features 84, 94 between the barrel 8 and the receptacle 9 being mutually disengaged in this step. In this way, the material to be dispensed is pushed as far as possible towards the dispensing nozzle of the cartridge, thus limiting the losses of material.

Advantageously, the thrust force F' to be applied by the practitioner on the lever 3 is slight and does not require the use of the two hands. Advantageously, the movement of the fingers of the practitioner to moves the lever 3 for extruding the material with the dispensing gun (i.e. for moving the lever 3 from the intermediate state to the final state) is of reduced amplitude. Thus, the dispensing gun is more ergonomic and easier to use than conventional dispensing devices.

The invention is not limited to the examples described and shown. In particular, other materials and shapes than those described above can be considered for the constitutive members of a cartridge to be used with a dispensing gun according to the invention.

## Claims

1. A dispensing gun (1) for a cartridge comprising a frame (2) having a handle (21), an injection gate (22) for connecting a cartridge, said injection gate (22) being located at the distal part of the frame (2), a lever (3) comprising at least two teeth (31) and a piston (4) comprising at least two notches (41), wherein:
- the dispensing gun (1) comprises means for directly locking the cartridge on the injection gate (22); and
- the dispensing gun (1) comprises means for pushing the piston (4) inside the cartridge so that the material contained in the cartridge is extruded in a single piston stroke; and
- the dispensing gun (1) is configured so that the lever (3) comprises an actuating state in which the first notch (41) of the piston (4) and the first tooth (31) of the lever (3) are engaged together prior to connecting the cartridge so that the lever (3) and the handle (21) form an angle ranging from 80° to 120°, preferably being 90°.

2. The dispensing gun according to claim 1, configured so that the lever (3) further comprises a final state in which the lever (3) is depressed and the piston (4) of the dispensing gun is engaged in the cartridge so that the material initially contained in the cartridge has been entirely extruded.

3. The dispensing gun according to claim 1 and claim 2, configured so that the lever (3) further comprises an intermediate state in which the lever (3) is maintained in a position between the actuating state and a final state, for contacting the piston (4) close to the piston of the cartridge so that the dispensing gun is ready to use for extruding the material contained in the cartridge.

4. The dispensing device according to any one of claims 1 to 3, wherein the injection gate (22) is configured for locking a cartridge which has a base section with two opposite locking wings, preferably the injection gate (22) comprise means for directly locking the external sleeve (7) of the cartridge (6) via its two locking wings (77).

5. The dispensing gun according to any one of claims **1** to **4,** wherein the piston (4) comprises a rod (41) configured to be received in the internal volume of the cartridge when locked on the distal part of the injection gate (22).

6. The dispensing gun according to any one of claims **1** to **5,** wherein the pivot of the lever (3) from the actuating state to the final state displaces the piston (4) in the range from 10 mm to 20 mm, preferably from 14 mm to 16 mm; more preferably from 15 mm to 18 mm.

7. The dispensing gun according to any one of claims **1** to **6,** wherein when the lever (3) is in an actuating state, the distal end of the internal piston (4) is located at the proximal end of the injection gate (22).

8. The dispensing gun according to any one of claims **1** to **7,** wherein the frame (2) comprises one or more ribs, preferably comprises one rib.

9. The dispensing gun according to claim **8,** wherein the dispensing gun comprises a washer positioned behind the frame's rib.

10. The dispensing gun according to any one of claims **3** to **9,** wherein when the lever (3) is in the intermediate state, the lever (3) is maintained in a position between the actuating state and a final state by a spring plunger.

11. The dispensing gun according to any one of claims **1** to **10,** wherein the injection gate (22) comprises a proximal part configured to connect the distal end of the frame (2) and a distal part configured to connect and lock the two opposite locking wings of the base section of the cartridge.

12. The dispensing gun according to any one of claims **1** to **11,** wherein the frame (2) is made of an injected-molded polymer and the injection gate (22) is made of metal.

13. The dispensing gun according to any one of claims **1** to **12,** wherein the dispensing gun is autoclavable and/or decontaminable.

14. A system comprising the dispensing gun (1) according to any one of claims 1 to 13 and a cartridge (6) having a base section with two opposite locking wings (77).

15. A method of dispensing a material by means of the dispensing gun (1) as described above, comprising steps in which:
- in a first step of initiating the dispensing gun of the invention, under the action of a thrust force applied on the lever (3), the lever is positioned in an actuating state in which the first notch (41) of the piston (4) and the first tooth (31) of the lever (3) are engaged together prior to connecting the cartridge (6) so that the lever (3) and the handle (21) form an angle ranging from 80° to 120°, preferably of almost 90°;
- in a second step of locking on the distal part of the injection gate (22), the base section of the cartridge containing the material to be delivered;
- in a third step of moving the piston (4) of the dispensing gun (1) in a position ready to be used for extrusion of the material contained in the cartridge (6); and
- in a fourth step of dispensing the material contained in the cartridge (6) under the action of a thrust force applied on the lever (3) until the lever is depressed (final state), the piston (4) is displaced inside the cartridge so that the entire material is extruded.
